# EUROPEAN PATENT APPLICATION

(11) **EP 1 414 179 A1**
(43) Date of publication of application: **28.04.2004**
(21) Application number: 03103912.6
(22) Date of filing: 22.10.2003
(51) Int. Cl.: H04L 1/24, H04L 1/20, H04L 1/18

(54) **A method for determining packet error rate of wireless LAN stations**

(30) Priority: 22.10.2002 US 277856
(71) Applicant: TEXAS INSTRUMENTS INCORPORATED, Dallas, TX 75265 (US)
(72) Inventor: Serceki, Zeljko, Santa Rose, CA 95409 (US); Wilhoyte, Michael E., Santa Rosa, CA 95403 (US)
(74) Representative: Holt, Michael

(57) **Abstract**

A test system (100) is disclosed in which the packet error rate of a wireless card can be determined without having knowledge of the software interface to the card. The wireless card under test (106) is placed inside an anechoic chamber (102). Test equipment emulates an access point and the card under test "associates" itself with the emulated access point. The test equipment includes an arbitrary waveform generator (130), RF signal generator (132), and a controller (114) which emulates an access point. The controller (114) commands the arbitrary waveform generator (130) and RF signal generator (132) to transmit a test data packet to the card under test (106). If the test data packet is correctly received by the test card (106), the card transmits back an acknowledgment packet. The controller (114) computes the packet error rate based on the number of lost packets relative to the total number of test data packets sent.

## Description

### FIELD OF THE INVENTION

The present invention generally relates to a method of determining packet error rates of wireless stations. More particularly, the invention relates to a method of determining packet error rates in the face of varying degrees of noise for any manufacturer's wireless local area network ("WLAN") station.

### BACKGROUND OF THE INVENTION

In a network of computers and/or related computing devices, data packets are transmitted across the network infrastructure from one node to another. A packet that is sent from a source node to a destination node is not always received by the destination node accurately. One or more bits may have flipped state (i.e., a logic "1" may have turned into a logic "0", and vice versa). This problem is particularly significant for wireless networks (e.g., IEEE 802.11 networks). Communications across a wireless medium are particularly susceptible to noise generated by equipment external to the wireless network.

By way of background information, wireless networks (e.g., 802.11 networks) include two or more wireless stations capable of wirelessly communicating with one another. A typical architecture of such a wireless network includes one or more access points ("APs") each of which is associated with one or more wireless stations. A wireless station, that is not an AP, may comprise a portable computer that includes a wireless local area network ("LAN") card. The wireless LAN card may be provided by any one of a variety of manufacturers and includes one or more antennas and other electronics that control the operation of the wireless capability of the station.

Most wireless networks include the ability to detect packet transmission errors and correct the error. For example, in an 802.11 network for each data packet transmitted to a destination station, the destination station transmits an acknowledgment packet back to the source station. The acknowledgment packet lets the source station know that the original data packet was correctly received by the destination station. If an acknowledgment packet is not received by the source station with in a predetermined period of time, the source station determines that an error occurred preventing the packet from being correctly received by the destination station. The source station then resends the original data packet with the expectation that the retransmitted data packet will be correctly received by the destination station. Because packet errors are often dealt with by retransmitting the packet, packet errors slow down the operation of the network and thus are highly undesirable.

For a variety of reasons, it is desirable to know the packet error rate ("PER") for a wireless station. For purposes of this disclosure, the PER is defined as the percentage of packets sent to a station that are not correctly received. For example, if out of 100 packets, 98 are correctly received and 2 are not, the PER is 2%. Each manufacturer of wireless cards generally knows the PER of its own wireless cards, but may not know the PER of its competitors' wireless cards-the PER may be a parameter that a manufacturer does not make widely known. Even if a manufacturer did reveal its PER to the public, the PER is generally a function of the amount of noise present in the environment in which the wireless station is operating. That is, a higher level of noise generally causes more packets to be lost due to errors. Consequently, the PER of a wireless station generally increases with increasing levels of noise. As such, it would be desirable to compare PERs of various wireless cards as a function of noise level.

Thus, it is generally desirable to compare the PER associated with one manufacturer's wireless card with the wireless card of another manufacturer, and to do so with varying levels of noise. With one's own wireless card, known registers and the like can be read to determine which packets were correctly received and which were not. With the wireless card of another manufacturer, it may not be known how to interact with the card's logic and/or software interface to access such information. Thus, a problem exists as to how determine the packet error rate of a wireless card in which the electronics contained thereon are proprietary thereby precluding easy access to registers and memory associated with the card.

### SUMMARY OF THE INVENTION

The problems noted above are solved in large part by a test configuration in which the packet error rate of a wireless card can be determined without having knowledge of the software interface to the card. In accordance with the preferred embodiment, the wireless card under test is placed inside an anechoic chamber. Test equipment, some of which may also be inside the chamber emulates an access point and the card under test "associates" itself with the emulated access point. At this point, the test card believes it is communicating with a conventional access point. The test equipment preferably includes an arbitrary waveform generator, RF signal generator, a computer through which an operator controls the system, and a controller which emulates an access point. The controller commands the arbitrary waveform generator and RF signal generator to transmit a test data packet to the card under test. If the packet is correctly received by the test card, the card transmits back an acknowledgment packet in accordance with the wireless standard to which it was designed (e.g., IEEE 802.11). The controller determines which test data packets are received by the test card and which are lost by "listening" for the acknowledgment packets. An absence of an acknowledgement packet indicates a lost test data packet. The controller then can compute the packet error rate by dividing the number of lost packets by the total number of test data packets sent (and multiplying by 100 to convert to a percentage value if desired). Preferably, the RF signal generator introduces a desired amount of noise into the test data packet. This permits the operator to determine the test card's packet error rate based on varying levels of noise.

A preferred embodiment of determining the packet error rate of a wireless LAN card comprises (a) emulating an access point; (b) transmitting a data packet; (c) determining whether an acknowledgment packet has been received; (d) if an acknowledgment packet is not received, determining that the data packet has been lost; (e) if an acknowledgment packet is received, determining that the data packet has not been lost; (f) repeating (b)-(e) a predetermined number of times; and (g) computing a packet error rate based on the number of data packets determined to be lost relative to the number of data packets transmitted in (b).

The preferred embodiments described herein permit the packet error rates of a variety of wireless cards to be determined and then compared against one another. This information is useful to wireless card manufacturers in their continued attempts to improve wireless technology.

### BRIEF DESCRIPTION OF THE DRAWINGS

For a detailed description of the preferred embodiments of the invention, reference will now be made to the accompanying drawings in which:
Figure 1 shows a preferred embodiment of a configuration in which a WLAN card can be tested to determine its packet error for varying levels of noise without having knowledge of the card's architecture and software interface;
Figure 2 shows a plot comparing the packet error rates of two WLAN cards determined using the configuration shown in Figure 1; and
Figure 3 shows an alternative in which a WLAN station containing the WLAN card under test is mounted on an electronically controllable turntable.

### NOTATION AND NOMENCLATURE

Certain terms are used throughout the following description and claims to refer to particular system components. As one skilled in the art will appreciate, wireless device and equipment companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...". Also, the term "couple" or "couples" is intended to mean either an indirect or direct electrical connection. Thus, if a first device couples to a second device, that connection may be through a direct electrical connection, or through an indirect electrical connection via other devices and connections.

### DETAILED DESCRIPTION OF THE PREFERRED EMBODIMENTS

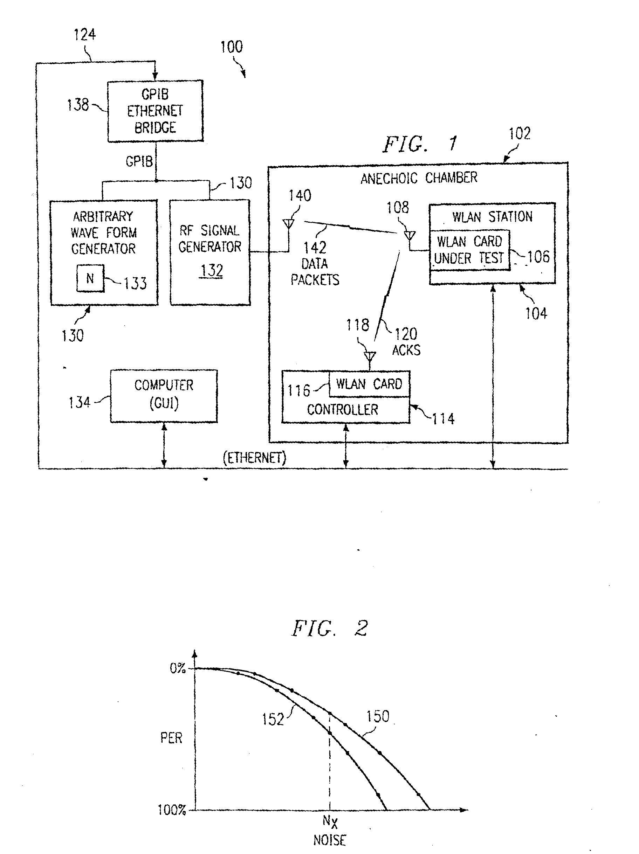

Referring now to Figure 1, a system 100 is shown in accordance with the preferred embodiment of the invention. As shown, system 100 includes an anechoic chamber 102 in which a WLAN card under test 106 is placed for testing to determine the card's packet error rate in the face of varying levels of noise. Anechoic chambers are well known in the art as rooms which are lined with a material that absorbs radio waves over a range of frequencies. Externally produced radio frequency ("RF") energy thus is not permitted to penetrate the chamber to reach the WLAN card under test 106 and other equipment contained therein. Further still, any RF energy generated by the equipment inside the chamber 102 radiates outward and is absorbed by the material lining the inside walls of the chamber and thus is not reflected thereby minimizing or preventing multipath radiation effects.

The WLAN card under test 106 includes or is coupled to an antenna 108 as is well known. The WLAN card preferably is included in a WLAN station 104 that may comprise a portable computer or other suitable host device. The WLAN station 104 preferably includes an interface to the Ethernet 124 or other suitable communication link.

A controller 114 is also located inside the anechoic chamber 102. Controller 114 includes a known WLAN card 116 and antenna 118 for communicating with the WLAN card under test 106 via a wireless communication link 120. The controller 114 preferably comprises a computer such as a notebook computer that also has an Ethernet interface.

The preferred embodiment of system 100 also includes an arbitrary waveform generator 130, an RF signal generator 132 and a control station 134 (preferably a computer) which provides a graphical user interface ("GUI") by which an operator can control the testing of the WLAN card under test 106. The arbitrary waveform generator 130 preferably comprises a Tekronix AWG420/520 generator, or other suitable device. The arbitrary waveform generator converts stored digital I/Q samples to an analog signal which it then provides to RF signal generator 132. The analog signal produced by the arbitrary waveform generator 130 is a "baseband" signal. The baseband signal comprises a data packet which will be sent to the WLAN card under test 106. The composition of the data packet is generally compliant with the wireless standard to which the test card 106 comports. The data packet preferably contains header information as would be well known and a data payload. The data payload may be a random number sequence or other suitable value.

The RF signal generator 132 converts the baseband signal from the arbitrary waveform generator 130 to an RF signal. If the WLAN card under test 106 comprises an IEEE 802.11b-compliant card which operates in the Industry, Scientific and Medical ("ISM") band, the RF signal generator 132 is adjusted to convert the baseband signal from the arbitrary waveform generator 130 to the 2400 MHz ISM frequency band. The arbitrary waveform generator 130, which may be a Tekronix AWG420/520 generator, preferably also includes the ability to introduce, via noise control 133, a controlled amount of noise to the baseband data signal. Noise control 133 permits the amplitude of "white" noise to be controlled to a known level. Thus, the output signal from the RF signal generator 132 comprises a known test data packet to which a known amount of noise has been mixed. This data packet can then be transmitted to the WLAN card under test via antenna 140 included inside the anechoic chamber 102 and connected to RF signal generator 132.

The arbitrary waveform generator 130 and RF signal generator 132 may have well known GPIB interfaces and thus a GPIB-to-Ethernet bridge 138 is included to couple the waveform and RF signal generators 130, 132 to the Ethernet. The computer 134 permits an operator the ability control and check the status and results of the system via a GUI implemented on the computer 134. The computer 134 may be any suitable type of computer that has an Ethernet interface.

In general, each WLAN station and access point in a conventional WLAN has a unique address referred to as a "MAC address" to permit efficient communications in the WLAN. Referring still to Figure 1, the controller 114 is assigned a MAC address and preferably emulates a WLAN access point. An operator initiates the interaction between the test system and the WLAN card under test 106 by supplying the GUI with initialization parameters such as the MAC address of the test card 106 (which typically is printed on the card itself by the manufacturer), multipath conditions, packet size, number of test data packets to be transmitted, data rate, etc. The computer 134 then configures the hardware with the information necessary to carry out communications with the test card 106. The controller 114 preferably generates a "beacon frame" template and sends this frame to the controller's WLAN card 116 and configures other parameters of the WLAN card 116 such as data rate as would be appreciated by those of ordinary skill in the art. The operator also configures the test card 106 for an "infrastructure" mode of operation in which the test card attempts to associate itself with an access point and communicates to a wireless network via the associated access point. The operator also specifies the service set identifier ("SSID") in accordance with known IEEE 802.11 techniques.

At this point the WLAN card under test 106, as it is designed to do, begins transmitting "probe request" frames in an attempt to find a compatible access point. A probe request is a frame which contains the SSID of the test card 106 and supported data rates. Upon receiving a probe request, the controller 114 responds by sending a probe response back to the test card 106 to indicate the presence of the emulated access point. The controller's WLAN card 116 and the test card 106 then begin an "association" process. There are a variety of association techniques known to those of ordinary skill in the art. Once the WLAN card under test 106 associates itself with the controller's WLAN card 116, the controller 114 then can act as an access point. That is, the WLAN card under test 106 believes the controller 114 is a legitimate access point.

At this point, the controller 114 enters a loop under software control in which, via the Ethernet 124, the controller 114 instructs the RF signal generator 132 to send a data packet to the WLAN card under test 106 via wireless link 142. In accordance with the applicable standard to which the test card 106 complies (e.g., IEEE 802.11), the test card receives the data packet and sends out an acknowledgment packet indicating the correct receipt of the data packet. In accordance with the preferred embodiment, the controller's WLAN card 116 receives the acknowledgments ("ACKs") from the test card. Accordingly, the controller 114 knows when the data packet is sent and knows that the WLAN card under test 106 has correctly received the data packet when the acknowledgment packet is received. If an acknowledgment packet is not received within a prescribed and/or programmable period of time (preferably dictated by the applicable wireless standard and specified via the GUI on computer 134), the controller 114 determines that the packet has been lost. Once the controller 114 determines the fate of the data packet (received or lost), the controller 114 requests equipment 130, 132 to transmit another test data packet to the card under test and the controller determines whether that packet is correctly received by the card under test (receives an ACK from the test card) or is lost (no ACK received from the test card).

The controller 114 repeats this process a predetermined or programmable number of times. In so doing, the controller 114 keeps track of the total number of test packets sent to the card under test 106 and, of those packets, which packets were correctly received and which were lost. The controller 114 thus can determine the packet error rate ("PER") for the test card by dividing the number of lost packets by the total number of packets and multiplying that result by 100 to convert to a "percentage" value (e.g., 2%).

As explained above, the RF signal generator 132 permits the operator the ability to introduce a desired level of noise into the test data packet signal. Accordingly, the above process can be performed for a desired noise level and then repeated one or more times for other noise levels. Figure 2 shows a plot of packet error rate versus noise level. The exemplary plot of Figure 2 shows two curves 150 and 152, each curve pertaining to a different WLAN card under test 106. Each curve comprises a plurality of PER values each computed in accordance with the procedure described above for a certain noise level. As can be seen and would be expected, the packet error rates increase with increasing levels of noise. The PER versus noise curve 152 shows that the PER for the card associated with that curve has a higher PER compared to the card associated with curve 150. For example, at noise level Nx the PER on curve 152 is higher than the corresponding point on curve 150.

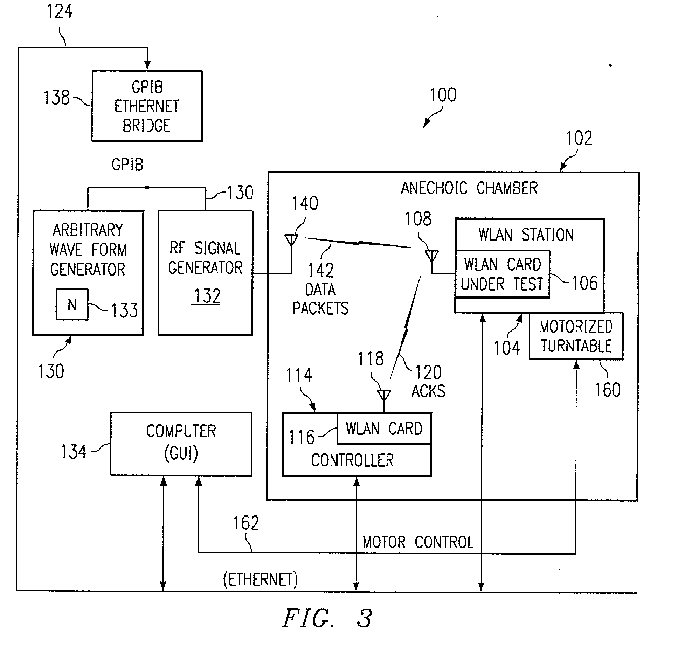

Figure 3 shows an alternative embodiment in which the WLAN station 104 containing the WLAN card under test 106 is mounted on a motorized turntable 160. The turntable 160 is controlled by computer 134 via a motor control signal 162 coupling the computer 134 to the turntable. The GUI on the computer 134 permits a user to specify the orientation of the turntable and thus orient to the antenna 108 associated with the card under test 106 to one or more positions. As such, the operator can examine the effects of antenna orientation on packet error rate for various antenna 108 orientations.

The preferred embodiments of the invention as depicted in Figures 1 and 3 have test data packets transmitted by RF signal generator 132 and acknowledgment packets received by a separate piece of equipment, controller 114. In accordance with another embodiment of the invention, the functions performed by RF signal generator 132 and controller 114 are combined together into a single piece of equipment. As such, a single antenna may be used to send test data packets and receive acknowledgments packets.

The preferred embodiment described above provides a method and system by which packet error rates of competing WLAN cards can be determined, for varying levels of noise if desired, and compared against one another. This information is useful for a variety of reasons such as determining how a manufacturer's WLAN card compares against competing cards on the market so that improvements can be made which benefit the public. A wireless access point is emulated so that the WLAN card being tested can be made to receive data packets and respond with acknowledgment packets in accordance with the wireless standard to which the card was designed. By determining packet error rate based on acknowledgment packets, which are required by the applicable standard, knowledge of the card's software interface is not needed to determine which packets were received and which were lost.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A method of determining the packet error rate of a wireless LAN card, comprising:
(a) emulating an access point;
(b) transmitting a data packet to the wireless LAN card;
(c) determining whether an acknowledgment packet has been received from said wireless LAN card;
(d) if an acknowledgment packet is not received, determining that the data packet has been lost;
(e) if an acknowledgment packet is received, determining that the data packet has not been lost;
(f) repeating (b)-(e) a predetermined number of times; and
(g) computing a packet error rate based on the number of data packets determined to be lost relative to the number of data packets transmitted in (b).

2. The method of claim 1 wherein (b) includes transmitting noise having a predetermined level with said data packet; and further including repeating (b)-(g) for different levels of said predetermined level of noise.

3. The method of either of claim 1 or 2 wherein (a) includes receiving a probe request and transmitting a probe response that includes a MAC address.

4. The method of any of claims 1 to 3 further including associating the computed packet error rate or rates with the wireless LAN card for which the packet error rate is or rates are computed in (g).

5. The method of any of claims 1 to 4 wherein (b) is performed inside an anechoic chamber.

6. The method of any of claims 1 to 5 further including repeating (b)-(g) for different orientations of an antenna associated with said wireless card.

7. A system that determines a packet error rate for a first wireless LAN card, comprising:
a controller that includes a second wireless LAN card and that wirelessly communicates with said first wireless LAN card;
a test data packet generator having an antenna through which test data packets are transmitted to said first wireless LAN card;
a computer coupled to said controller, first wireless LAN card and test data packet generator through which an operator can control the system;
wherein said controller emulates an access point, said test data packet generator sends test data packets to said first wireless LAN card, and said controller determines whether acknowledgment packets are received from said first wireless LAN card and computes a packet error rate.

8. The system of claim 7 wherein said test data packet generator comprises an arbitrary waveform generator coupled to an RF signal generator.

9. The system of claim 8 wherein said arbitrary signal generator introduces a controlled level of noise to said test data packet; and wherein said controller computes packet error rates for said first wireless LAN card for different ones of said level of noise.

10. The system of any of claims 7 to 9 wherein said controller determines a test data packet is lost when no acknowledgment packet is received within a prescribed period of time and computes said packet error rate by dividing the number of lost test data packets by the total number of test data packets transmitted.
